# EUROPEAN PATENT SPECIFICATION

(11) **EP 3 647 109 B1**
(45) Date of publication and mention of the grant of the patent: **04.08.2021**
(21) Application number: 18203763.0
(22) Date of filing: 31.10.2018
(51) Int. Cl.: B60N 2/015, B60N 2/427, B60N 2/20

(54) **PIVOT BRACKET FOR CONNECTING VEHICLE SEATS**
DREHPUNKTHALTEBÜGEL ZUM VERBINDEN VON FAHRZEUGSITZEN
SUPPORT PIVOT SERVANT À RELIER DES SIÈGES DE VÉHICULE

(43) Date of publication of application: 06.05.2020
(73) Proprietor: Volvo Car Corporation, 405 31 Göteborg (SE)
(72) Inventor: FERNANDEZ SCHMIDT, Alejandro, SE-412 62 GÖTEBORG (SE); ROHDEN, Carl, SE-434 48 KUNGSBACKA (SE)
(74) Representative: Kransell & Wennborg KB

(56) References cited:
- EP-A2- 1 065 095
- DE-A1- 10 353 449
- DE-A1- 19 817 143
- DE-U1-202008 002 239
- JP-A- H1 044 843

## Description

### Field of the Invention

The present disclosure relates to a pivot bracket for connecting a vehicle seat to a vehicle body.

### Background

A back seat in a vehicle is often attached to the vehicle body via a pivotal connection which enables for the seat to be folded. The attachment may for example comprise a hinge type bracket firmly attached to the vehicle body. The document JP H10 44843 A shows an example of a bracket from the prior art.

The arrangement of such brackets should preferably allow for each of the seats to be independently foldable.

In the event of a vehicle collision the bracket responsible for holding the vehicle seat in place may be exerted to high forces. Thus, not only should the bracket provide flexibility in be able to fold the vehicle seats, it should also be able to withstand the high forces caused by a vehicle collision.

In the event of a collision high forces originate from the actual collision with another vehicle or an object, but also from loose items in the vehicle such as e.g. luggage. Accordingly, vehicle collisions may cause forces on the bracket holding the vehicle seat from various directions and with almost arbitrary magnitude.

In order to provide a safe attachment of the vehicle seat it is of interest to provide a bracket which improves the safety for then occupants in the event of a vehicle collision.

### Summary

The present disclosure describes a pivot bracket for connecting a vehicle seat to a vehicle body which provides improved safety for occupants in the event of a vehicle collision.

The proposed pivot bracket provides this partly by an improved main body which is better adapted to withstand bending and twisting forces than prior art pivot brackets. Furthermore, the pivot bracket of the present disclosure provides for a more controlled the displacement of the main body in the event of a collision. Overall, the pivot bracket advantageously provides for improved structural integrity of the pivot bracket and therefore also improved safety for occupants in the event of a vehicle collision.

With respect to improving the bending and twisting characteristics of the main body, this is achieved by longitudinal reinforcing structures extending towards relevant attachment portions adapted for connecting the main body to the vehicle body.

Further, in order to provide a more controlled displacement an energy absorption member configured to deform in the event of a rear or front impact to the vehicle is connected to a distal attachment portion of the pivot bracket. In the event of a collision, the energy absorption member deforms and thus absorbs some of the energy from the collision so that the main body may be less affected by the collision. In addition, the controlled displacement provided by the inclusion of the energy absorption member has been found to lead to a smaller displacement compared to prior art pivot brackets.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig. 1 illustrates application of a pivot bracket according to example embodiments of the invention;
Fig. 2a-b are perspective view of an example pivot bracket according to embodiments of the invention;
Fig. 3a-b illustrates a controlled displacement of a pivot bracket under the influence of a force caused by a vehicle collision;
Fig. 4 illustrates an example an energy absorption member; and
Fig. 5 illustrates a pivot bracket attached to a vehicle body.

### Detailed Description of Example Embodiments

In the present detailed description, various embodiments of the pivot bracket according to the present invention are described. However, this invention may be embodied in many different forms and should not be construed as limited to the embodiments set forth herein; rather, these embodiments are provided for thoroughness and completeness, and fully convey the scope of the invention to the skilled person. Like reference characters refer to like elements throughout.

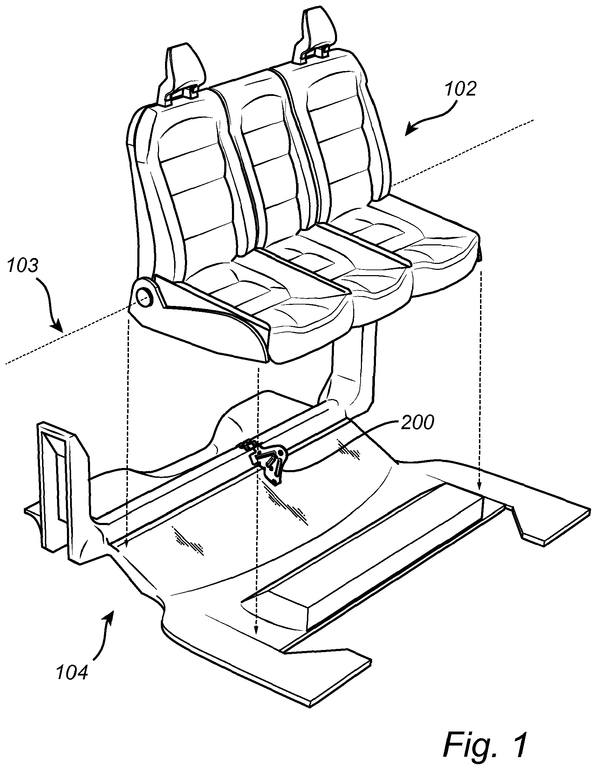

Fig. 1 schematically illustrates an example application of a pivot bracket 200 according to embodiments of the invention. In fig. 1 the pivot bracket 200 is schematically shown to provide a connection for attaching the vehicle seats 102 to the vehicle body 104. The pivot bracket 200 is mechanically attached to the vehicle body 104 via suitable means such as weld spots and/or bolts.

The pivot bracket 200 provides for a pivotable connection for the vehicle seats 102. This enables the individual seats connected to the pivot bracket 200 to be foldable by a folding action about the rotation axis 103 provided by the pivotable connection with the pivot bracket 200.

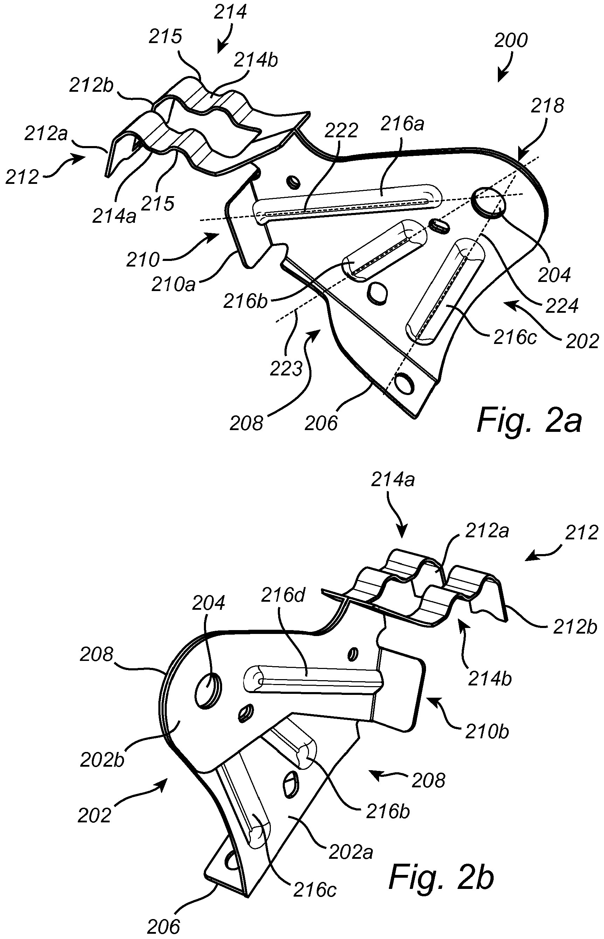

Fig. 2a illustrates a first perspective view of an example pivot bracket 200. The pivot bracket 200 comprises a set of attachment portions 206, 210, 212 configured for attaching the pivot bracket 200 to the vehicle body. The attachment portions 206, 210, 212 advantageously allows for a suitable attachment in the vehicle body, such as bolting or welding, which ever technique is suitable for a specific case.

The pivot bracket 200 comprises a main body 202 including at least one longitudinal reinforcing structure 216a-c extending towards at least one attachment portion 206, 210. The attachment portions 206, 210 are configured for attaching the main body 202 to the vehicle body 104. The longitudinal reinforcing structures 216a-c provides the advantage over prior art brackets to increase the bending stiffness of the pivot bracket and to provide an improved capability to transfer load into the vehicle body in the event of a collision.

An energy absorption member 214 is connected to a distal attachment portion 212 of the pivot bracket and is configured to deform in the event of a rear or front impact to the vehicle.

With regards to prior art brackets, the predictability of the behavior of the pivot bracket according to the invention is improved by the provision of energy absorption member 214 which deforms in the event of e.g. a front or rear vehicle impact of sufficient magnitude. Furthermore, the deformation of the energy absorption member 214 advantageously absorbs energy from the vehicle impact which thereby reduces the risk of a complete structural failure of the pivot bracket and thereby the attachment for the vehicle seat.

The energy absorption member 214 is mainly adapted for at least partly predictable deformation in the event of a front collision when the pivot bracket is mounted in a vehicle, although predictability is conceivable also in the event of a rear collision.

In order for the energy absorption member 214 to deform, the vehicle impact should be sufficiently violent and results in a force applied on the energy absorption member 214 with sufficient magnitude. The threshold for the sufficient force for causing a deformation is subject to the specific case, e.g. the vehicle type, seat configuration, predicted load on the seat, etc.

By the provision of the energy absorption member 214 and the longitudinal reinforcement structures 216a-c the displacement of the pivot bracket 200 may thus be reduced compared to prior art brackets. Thereby, the inventive pivot bracket advantageously provides for improved structural integrity of the pivot bracket-vehicle seat assembly and therefore also improved safety for occupants in the event of a vehicle collision.

In the presently described embodiment, the main body 202 of the pivot bracket 200 comprises an attachment point 204 for providing the pivotal connection for the vehicle seat, see fig. 1 for an example vehicle seat. Here, the pivotal connection comprises a through-hole 204 through which a pivot rod may be arranged and attached to the vehicle seat.

Further, a front attachment portion 206 is connected with the main body 202. Here, the front attachment portion 206 is made in one piece with the main body 202, although other solutions for providing the front attachment portion are conceivable. The front attachment portion 206 is arranged on an attachment side 208 of the main body, i.e. the side of the main body 202 adapted to be attached to the vehicle body.

Furthermore, an intermediate attachment portion 210 is connected with the main body 202. Here, the intermediate attachment portion 210 is made in one piece with the main body 202, although other solutions for providing the intermediate attachment portion are conceivable. The intermediate attachment portion 210 is arranged on the attachment side 208 of the main body.

In addition, the distal attachment portion 212 is connected with the main body 202 via the energy absorption member 214. The distal attachment portion 212 is mechanically connected with the energy absorption member 214 which is mechanically connected with the main body 202.

Longitudinal reinforcing structures are here exemplified by longitudinal recesses 216a, 216b, and 216c. Longitudinal recesses are relatively simple to realize in manufacturing and yet provides a reliable reinforcement in a cost-efficient way. However, other possible longitudinal reinforcing structures are conceivable.

The longitudinal recesses 216a, 216b, and 216c have been formed in the main body 202. The longitudinal recesses 216a, 216b, and 216c are arranged along a respective axis 222, 223, 224 from the attachment side 208 to the side 218 of the pivotal connection 204, i.e. the longitudinal recesses 216a-c extend across the longitudinal dimension of the pivot bracket, along the extensions from the attachment side 208 to the side 218 of the pivotal connection 204.

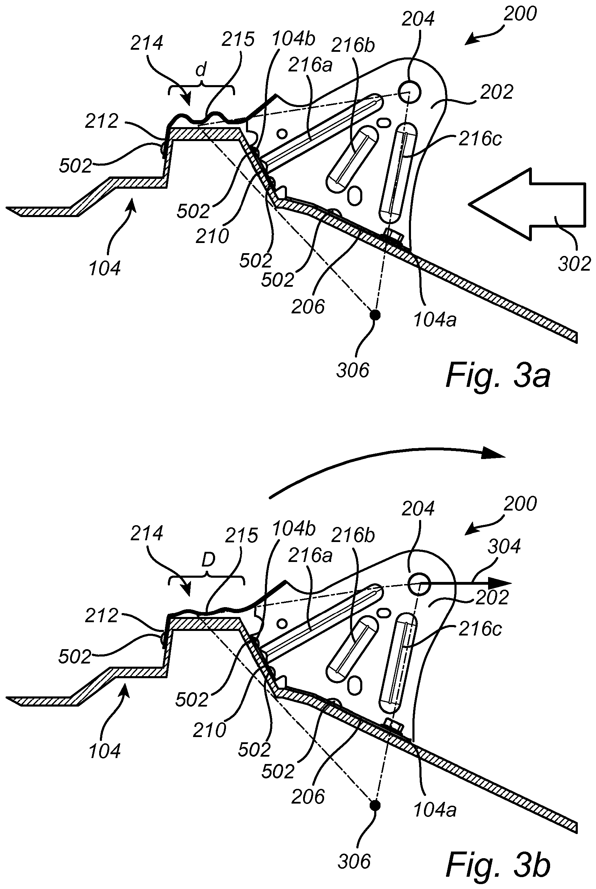

The absorption member 214 is here shown as a pair of energy absorption members 214a and 214b. The energy absorption members 214a and 214b may be arranged in parallel. Each of the energy absorption members 214a-b comprises a wave structure 215 which is deformable when subjected to a force along the distal attachment portion 212 to the main body 202 direction. This will be further described with respect to figs. 3a-b.

The locations of the longitudinal recesses 216a-c are such that the bending stiffness of the pivot bracket 200 is increased. This may be configured for the specific load case.

In this example embodiment, the longitudinal recesses 216a-c are straight elongated longitudinal recesses 216a-c. Furthermore, the longitudinal recesses 216a-c are arranged with their respective axis 222, 223, 224 non-parallel to each other. In other words the elongation axes 222, 223, 224 intersect. This provides for improved distribution of the transfer of load into the vehicle body in the event of a collision. Furthermore, in this example embodiment the respective axes 222, 223, 224 intersect with the attachment point 204 although this is not strictly required.

According to embodiments, one of the longitudinal reinforcing structures 216a is connected with one of the attachment portions 210. In the presently described example embodiment, the longitudinal recess 216a is connected with the intermediate attachment portion 210. In this way, it is possible to prevent forming a bending line for bending of the main body 202 of the pivot bracket 200. Thus, if one longitudinal reinforcement structure is connected with the intermediate attachment portion 210, then the bending stiffness stability provided by the longitudinal recess reaches all the way to the intermediate attachment portion 210.

Further, if the other longitudinal reinforcement structures are shorter than the one reaching to the intermediate attachment portion 210, the natural bending line of the main body 202 is broken by the longitudinal reinforcement structure 216a that reaches all the way to the intermediate attachment portion 210. Otherwise, it would be natural for the main body 202 to bend at a line formed just below the end portions of the longitudinal recesses 216b-c closest to the attachment side 208 of the main body 202. With the longitudinal recess 216a extending all the way to the intermediate attachment portion 210, this is prevented. The longitudinal recesses 216b-c are here shown to be shorter than the longitudinal recesses 216a extending all the way to the intermediate attachment portion 210.

In addition, the load from the pivot bracket 200 in the event of a collision is more efficiently transferred to the vehicle body if one longitudinal reinforcement structure is connected with one attachment portion.

The length, width, and locations of the longitudinal reinforcing structures may be tailored for a specific load case. In other words, depending on the vehicle type, seat configuration, anticipated force at a collision etc.

As is more clearly shown in fig. 2b, in this example embodiment, the main body 202 comprises a first main body portion 202a and a second main body portion 202b which are attached together. The distal attachment portion 212a, a first intermediate attachment portion 210a and a front attachment portion 206 are connected to the first main body portion 202a, and a second intermediate attachment portion 210b is connected to the second main body portion 202b. The provision of the second main body portion 202b comprising the second intermediate attachment portion 210b provides for further improved transfer of load into the vehicle body.

The main body portions 202a and 202b are attached together at the interfacing plane of the two planar plate main body portions 202a, 202b. The main body portions 202a and 202b may be welded together, although other attachment techniques are conceivable.

The first main body portion 202a comprises at least one longitudinal reinforcing structure 216a connected with the first intermediate attachment portion 210a of the first main body portion 202a. The second main body portion 202b comprises at least one longitudinal reinforcing structure 216d connected with the second intermediate attachment portion 210b. The transfer of load into the vehicle body is thereby further improved by the provision of the longitudinal reinforcing structure 216d connected with the second intermediate attachment portion 210b. In addition, improved bending stiffness of the pivot bracket 200 is provided.

The longitudinal recess 216d on the second main body portion 202b and the longitudinal recess 216a on the first main body portion 202a are arranged facing each other, and in parallel, on opposite sides of the plane in the interface between the first main body portion 202a and the second main body portion 202b.

In this example embodiment, the first main body portion 202a comprises the longitudinal recesses 216a-c. The first distal attachment portion 212a is connected to the first main body portion 202a via an energy absorption member 214a. The second distal attachment portion 212b is connected to the second main body portion 202b via an energy absorption member 214b.

Fig. 3a is a partial cross-sectional view of a pivot bracket 200 attached to a vehicle body 104 before a collision and fig. 3b shows the pivot bracket 200 after or during a collision.

Features with the same reference numerals will not be described repetitively, see instead figs. 1, 2a-b.

In fig. 3a, an energy absorption member 214 is shown in the form of a wave structure 215. Thus, one advantageous way to enable the energy absorption member 214 is provided by embodiments of the invention in which the energy absorption member comprises deformable waves 215 adapted to stretch in the event of a front impact to the vehicle with sufficient magnitude. Here, the wave structure 214 comprises an exemplary number of undulations. In practice the number of undulation, i.e. "waves" may be tailored for the specific load case.

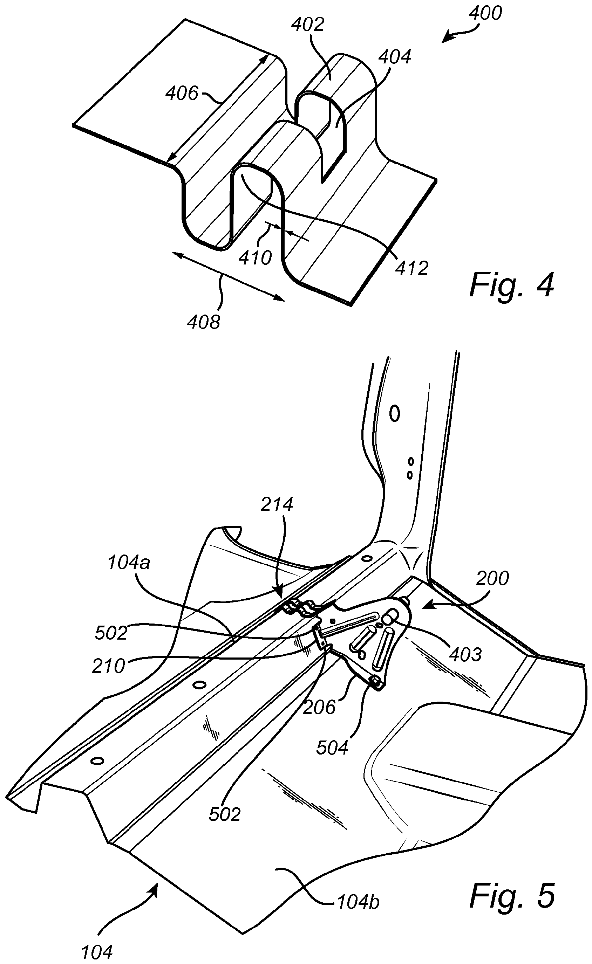

Other parameters which may be tailored are the length of the energy absorption member, or the width of the energy absorption member, or the thickness of the energy absorption member. Furthermore, in some embodiments, a cut out portion forming a through-hole 404 (see fig. 4) in the energy absorption member may also provide for tailoring the behavior of the energy absorption member in the event of a crash.

In the non-deformed state of the energy absorption member 214 shown in fig. 3a the length d of the energy absorption member 214 is known from the design and manufacturing of the pivot bracket 200.

When the vehicle is subjected to a frontal collision as in indicated by the arrow 302 representing a force caused by the collision, the energy absorption member 214 is configured to deform in order to absorb some of the energy from the collision.

The energy absorption member 214 is configured to deform along an axis between the distal attachment portion 212 and the main body 202 such that a displacement of the main body 202 is allowed. This advantageously provides for a displacement of the attachment point 204 in the front-rear direction of the vehicle, parallel with a direction between the distal attachment portion 212 and the main body 202 of the pivot bracket.

The displacement may be determined by the specific configuration of the energy absorption member. Thus, the displacement may be at least partly predictable in the front-rear direction of the vehicle.

The predictability in the displacement is provided by knowledge of the length of the energy absorption member when the wave structure has been fully or partly stretched.

Fig. 3b conceptually illustrates the pivot bracket 200 during or after the collision described with reference to fig. 3a.

As can be seen in fig. 3b, the wave structure 215 of the energy absorption member 214 has been flattened out by the force forcing the main body 202 forward towards the direction of the collision point, to the right in fig. 3a-b. The flattened out wave structured energy absorption member 214 is now of length D, wherein the length D is longer than the original length d of the wave structured energy absorption member 214.

Thereby, a displacement of the main body is provided in the direction indicated by the arrow 304. The displacement of the main body 202 is related to the difference between the length D of the deformed wave structured energy absorption member 214 shown in fig. 3b and the length d of the non-deformed structured energy absorption member 214 shown in fig. 3a.

Furthermore, the arrangement of the attachment portions and the energy absorption member are adaptable to provide a predetermined center of rotation (306) for the main body. In other words, variations in the attachments shapes and locations allows for tailoring the center of rotation 306 and thereby also adapt the different displacements of the main body 202 in the event of a collision with different load scenarios.

In this particular case, the arrangement of the front attachment portion 206, the intermediate attachment portion 210, the distal attachment portion 212, and the energy absorption member 214 are adapted to provide a predetermined center of rotation 306 for the attachment point 204 of the main body 202. Thus, the location of the attachments portions 206, 210, 212 and thereby also the energy absorption member 214 provides for a predictable rotation of the attachment point 204 about a predetermined center of rotation 306.

It should be understood that the specific displacement of the main body 202 as shown in the transition from fig. 3a to fig. 3b is shown as an example in order to illustrate an example behavior of the pivot bracket 200 in the event of a vehicle collision.

In the event of a collision, other parts of the vehicle may deform, e.g. the vehicle parts where the pivot bracket is attached. Furthermore, the spot welds and the attachment portions may also deform as a consequence of a collision. However, by means of the configuration of the inventive pivot bracket 200 the energy absorption member 214 may be deformed in a controlled way to allow for the controlled displacement and rotation about the center of rotation 306.

Fig. 3a further illustrates that the plane of attachment to the vehicle body for one of the attachment portions 210 intersects the plane of attachment to the vehicle body for another attachment portion 206.

In the event of a rear collision, i.e. resulting in a force opposite the one indicated by the arrow 302, the longitudinal reinforcement structures, here shown as longitudinal recesses 216a-d, provides deformation stability for the main body 202, to avoid bending of the main body 202. The longitudinal recesses 216a-d are configured to enhance the transmission of the load towards the intermediate attachment portion 210 at least in the event of a rear collision.

Furthermore, the arrangement of the intermediate attachment portion 210, or 210a-b, at a plane inclined with the horizontal plane allows for a large portion of the force caused by a rear collision on the vehicle to be directed normal to the planar intermediate attachment portion 210, and in the plane of the longitudinal recess 216a. The longitudinal recess 216a attached with the intermediate attachment portion 210 enhances the capability to withstand a twisting or bending behavior of the pivot bracket 200. The other longitudinal recesses 216b-d further improves the twisting or bending stiffness.

Fig. 4 illustrates an example energy absorption member 400. According to embodiments, the deformable waves 402 may comprise cut-out portions forming through-holes 404 in the deformable waves 402. By the provision of cut-outs, the force necessary for causing a deformation of the energy absorption member may be tuned for a specific load-case. With cut-outs the force sufficient for causing a deformation is reduced.

Other parameters that may be tuned for the specific load-case may be selected from the group comprising diameter or waves, length 408 of the energy absorption member, width 406 of the energy absorption member, thickness 410 of the energy absorption member, the number of waves 402, fillet radii of the wave corners 412, etc.

Fig. 5 illustrates a pivot bracket attached to a vehicle body 104. A pin bolt 403 is arranged through the attachment point, here exemplified as through hole in the main body of the pivot bracket as described above. The front attachment portion 206, the intermediate attachment portion 210, and the distal attachment portion 214 are attached to respective vehicle parts being part of the vehicle body 104. The vehicle parts to which the attachment portions 206, 210, 212 are attached may be one and the same vehicle part, or different vehicle parts. However, the vehicle parts are mechanically fixed with relation to each other.

The attachment portions 206, 210, 212 may be directly or indirectly attached to the vehicle body 104.

The distal attachment portion 214 is attached on the rear side of the vehicle part here shown as a cross member 104a, with e.g. spot welds, whereas the intermediate attachment portion 210 is attached to the front side of the cross member 104a, opposite the side where the distal attachment portion 214 is attached. The intermediate attachment portion 210 is attached to the cross member 104a by spot welds 502. The front attachment portion 206 is here shown attached with a bolt 504 to the vehicle part 104b, here shown as the vehicle floor 104b. The front attachment portion 206 may be attached to the vehicle floor 104b by a combination of bolts and spot welds.

Spot welds provides for a simple yet robust attachment means with e.g. reduced weight compared to e.g. bolts.

The pivot bracket according to embodiment of the invention may be made from a metal. Manufacturing techniques for producing a pivot bracket include e.g. stamping of a metal sheet.

The longitudinal recesses may generally be known as "depressions" or indentations or notches in the main body.

Furthermore, the shape, depth, length, and width of the longitudinal reinforcement structures may be different from the exemplified example embodiments shown in the drawings. The shape, depth, length, and width of the longitudinal reinforcement structures are tailored for a specific load case.

Although the depicted longitudinal reinforcement structures are here shown as straight segments, they may generally comprise curved segments or several straight interconnected segments. However, the overall directions of the longitudinal reinforcement structures are along the respective longitudinal axis from the attachment side to the side of the attachment point of the pivot bracket, i.e. along the longitudinal extension of the pivot bracket.

A vehicle in accordance with the invention may be any vehicle operative on a road, such as a car, a truck, a lorry, a bus, etc.

The person skilled in the art realizes that the present invention by no means is limited to the preferred embodiments described above. On the contrary, many modifications and variations are possible within the scope of the appended claims.

For example, the longitudinal reinforcing structures may be provided in various ways. In addition to the herein shown recesses, the longitudinal reinforcing structures may be provided by e.g. a rod attached to the main body or by any other solid or hollow structures which may provide improved bending and twisting stiffness. The longitudinal recesses provide one advantageous way to realize the longitudinal reinforcing structures.

Furthermore, the illustrated locations of longitudinal reinforcing structures are herein shown to exemplify the invention and the specific configuration may be adjusted depending on the specific case.

In addition, although the number of longitudinal reinforcing structures are herein illustrated as being three, this merely serves as an example and many difference configurations are possible and within the scope of the appended claims.

Furthermore, the energy absorption member may be provided in various ways, as long as it provides for a deformation which absorbs some energy from a collision and that allow for a displacement. The specific shape of the energy absorption member may differ from case to case. In addition to the herein shown wave-structure, other possible shapes may be saw tooth, sinusoids, or any other irregular or regular undulating structures.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A pivot bracket (200) for connecting a vehicle seat (102) to a vehicle body, the pivot bracket comprises:
- a main body (202) including at least one longitudinal reinforcing structure (216a-d) extending towards at least one attachment portion (206, 210, 210a, 210b, 212) configured for attaching the main body to the vehicle body (104), the attachment portions including a front attachment portion (206) and a planar intermediate attachment portion (210), wherein the intermediate attachment portion is inclined with the horizontal plane when arranged in the vehicle so that at least a portion of the force caused by a rear collision on the vehicle is directed normal to the planar intermediate attachment portion, and
- an energy absorption member (214) connected to a distal attachment portion (212) of the pivot bracket and configured to deform in the event of a rear or front impact to the vehicle, the distal attachment portion is connected with the main body via the energy absorption member.

2. The pivot bracket according to claim 1, wherein the energy absorption member is configured to deform along an axis between the distal attachment portion and the main body such that a displacement of the main body is allowed.

3. The pivot bracket according to any one of claims 1 and 2, wherein the energy absorption member comprises deformable waves (215) adapted to stretch in the event of a front impact to the vehicle.

4. The pivot bracket according to claim 3, wherein the deformable waves comprises cut-out portions forming through-holes (404) in the deformable waves.

5. The pivot bracket according to any one of the preceding claims, comprising at least two energy absorption members (214a-b).

6. The pivot bracket according to any one of the preceding claims, wherein the axes (222, 223, 224) of at least two longitudinal reinforcing structures are non-parallel.

7. The pivot bracket according to any one of the preceding claims, wherein pivot bracket is configured to be attached to the vehicle body with spot welds.

8. The pivot bracket according to any one of the preceding claims, wherein the attachment portions and the energy absorption member are adaptable to provide a predetermined center of rotation (306) for the main body.

9. The pivot bracket according to any one of the preceding claims, wherein the plane of attachment to the vehicle body for one of the attachment portions intersects the plane of attachment to the vehicle body for another attachment portion.

10. The pivot bracket according to any one of the preceding claims, wherein one of the longitudinal reinforcing structures is connected with one of the attachment portions.

11. The pivot bracket according to any one of the preceding claims, wherein the pivot bracket is made from a metal material.

12. The pivot bracket according to any one of the preceding claims, wherein the energy absorption member is made in one piece with the main body.

13. The pivot bracket according to any one of the preceding claims, wherein the main body comprises a first main body portion (202a) and a second main body portion (202b) which are attached together, the distal attachment portion, a first intermediate attachment portion (210a) and the front attachment portion are connected to the first main body portion, and a second intermediate attachment portion (210b) is connected to the second main body portion.

14. The pivot bracket according to claim 13, wherein the first main body portion comprises at least one longitudinal reinforcing structure (216a) connected with the first intermediate attachment portion of the first main body portion, and the second main body portion comprises at least one longitudinal reinforcing structure (216d) connected with the second intermediate attachment portion.

15. The pivot bracket according to any one of the preceding claims, wherein the longitudinal reinforcing structure is a longitudinal recess.

## Patentansprüche

1. Drehpunkthaltebügel (200) zum Verbinden eines Fahrzeugsitzes (102) mit einer Fahrzeugkarosserie, wobei der Drehpunkthaltebügel Folgendes umfasst:
- einen Hauptkörper (202), der mindestens eine in Längsrichtung verlaufende Verstärkungsstruktur (216a-d) umfasst, die sich zu mindestens einem Befestigungsabschnitt (206, 210, 210a, 210b, 212) erstreckt, der dazu ausgelegt ist, den Hauptkörper an der Fahrzeugkarosserie (104) zu befestigen, wobei die Befestigungsabschnitte einen vorderen Befestigungsabschnitt (206) und einen planen Zwischenbefestigungsabschnitt (210) umfassen, wobei der Zwischenbefestigungsabschnitt zur horizontalen Ebene geneigt ist, wenn er im Fahrzeug angeordnet ist, sodass zumindest ein Teil der Kraft, die durch einen Heckaufprall auf das Fahrzeug erzeugt wird, normal zum planen Zwischenbefestigungsabschnitt geleitet wird, und
- ein Energieabsorptionselement (214), das mit einem distalen Befestigungsabschnitt (212) des Drehpunkthaltebügels verbunden und dazu ausgelegt ist, sich bei einem Heck- oder Frontalaufprall auf das Fahrzeug zu verformen, wobei der distale Befestigungsabschnitt über das Energieabsorptionselement mit dem Hauptkörper verbunden ist.

2. Drehpunkthaltebügel nach Anspruch 1, wobei das Energieabsorptionselement dazu ausgelegt ist, sich entlang einer Achse zwischen dem distalen Befestigungsabschnitt und dem Hauptkörper derart zu verformen, dass eine Verschiebung des Hauptkörpers zugelassen wird.

3. Drehpunkthaltebügel nach einem der Ansprüche 1 und 2, wobei das Energieabsorptionselement verformbare Wellen (215) umfasst, die dazu eingerichtet sind, sich im Falle eines Frontalaufpralls auf das Fahrzeug auszudehnen.

4. Drehpunkthaltebügel nach Anspruch 3, wobei die verformbaren Wellen ausgeschnittene Abschnitte umfassen, die Durchgangsbohrungen (404) in den verformbaren Wellen ausbilden.

5. Drehpunkthaltebügel nach einem der vorstehenden Ansprüche, mindestens zwei Energieabsorptionselemente (214a-b) umfassend.

6. Drehpunkthaltebügel nach einem der vorstehenden Ansprüche, wobei die Achsen (222, 223, 224) mindestens zweier in Längsrichtung verlaufender Verstärkungsstrukturen nicht parallel sind.

7. Drehpunkthaltebügel nach einem der vorstehenden Ansprüche, wobei der Drehpunkthaltebügel dazu ausgelegt ist, mittels Punktschweißung an der Fahrzeugkarosserie befestigt zu sein.

8. Drehpunkthaltebügel nach einem der vorstehenden Ansprüche, wobei die Befestigungsabschnitte und das Energieabsorptionselement dazu einrichtbar sind, einen festgelegten Drehpunkt (306) für den Hauptkörper vorzusehen.

9. Drehpunkthaltebügel nach einem der vorstehenden Ansprüche, wobei die Befestigungsebene an der Fahrzeugkarosserie für einen der Befestigungsabschnitte die Befestigungsebene an der Fahrzeugkarosserie für einen anderen Befestigungsabschnitt schneidet.

10. Drehpunkthaltebügel nach einem der vorstehenden Ansprüche, wobei eine der in Längsrichtung verlaufenden Verstärkungsstrukturen mit einem der Befestigungsabschnitte verbunden ist.

11. Drehpunkthaltebügel nach einem der vorstehenden Ansprüche, wobei der Drehpunkthaltebügel aus einem Metallmaterial besteht.

12. Drehpunkthaltebügel nach einem der vorstehenden Ansprüche, wobei das Energieabsorptionselement mit dem Hauptkörper einstückig gefertigt ist.

13. Drehpunkthaltebügel nach einem der vorstehenden Ansprüche, wobei der Hauptkörper einen ersten Hauptkörperabschnitt (202a) und einen zweiten Hauptkörperabschnitt (202b) umfasst, die aneinander befestigt sind, wobei der distale Befestigungsabschnitt, ein erster Zwischenbefestigungsabschnitt (210a) und der Frontbefestigungsabschnitt mit dem ersten Hauptkörperabschnitt verbunden sind und ein zweiter Zwischenbefestigungsabschnitt (210b) mit dem zweiten Hauptkörperabschnitt verbunden ist.

14. Drehpunkthaltebügel nach Anspruch 13, wobei der erste Hauptkörperabschnitt zumindest eine in Längsrichtung verlaufende Verstärkungsstruktur (216a) umfasst, die mit dem ersten Zwischenbefestigungsabschnitt des ersten Hauptkörperabschnitts verbunden ist, und der zweite Hauptkörperabschnitt zumindest eine in Längsrichtung verlaufende Verstärkungsstruktur (216d) umfasst, die mit dem zweiten Zwischenbefestigungsabschnitt verbunden ist.

15. Drehpunkthaltebügel nach einem der vorstehenden Ansprüche, wobei die in Längsrichtung verlaufende Verstärkungsstruktur eine in Längsrichtung verlaufende Aussparung ist.

## Revendications

1. Support pivot (200) servant à relier un siège de véhicule (102) à une carrosserie de véhicule, le support pivot comprenant :
un corps principal (202) comprenant au moins une structure de renforcement longitudinale (216a-d) s'étendant vers au moins une partie de fixation (206, 210, 210a, 210b, 212) conçue pour fixer le corps principal au corps du véhicule (104), les parties de fixation comprenant une partie de fixation avant (206) et une partie de fixation intermédiaire plane (210),
la partie de fixation intermédiaire étant inclinée par rapport au plan horizontal lorsqu'elle est située dans le véhicule de sorte qu'au moins une partie de la force provoquée par une collision arrière sur le véhicule soit dirigée normalement à la partie de fixation intermédiaire plane, et
un élément d'absorption d'énergie (214) relié à une partie de fixation distale (212) du support pivot et conçu pour se déformer dans le cas d'un impact arrière ou avant sur le véhicule, la partie de fixation distale étant reliée au corps principal par l'intermédiaire de l'élément d'absorption d'énergie.

2. Support pivot selon la revendication 1, l'élément d'absorption d'énergie étant conçu pour se déformer le long d'un axe entre la partie de fixation distale et le corps principal de sorte qu'un déplacement du corps principal soit autorisé.

3. Support pivot selon l'une quelconque des revendications 1 et 2, l'élément d'absorption d'énergie comprenant des ondes déformables (215) conçues pour s'étirer en cas de choc frontal sur le véhicule.

4. Support pivot selon la revendication 3, les ondes déformables comprenant des parties découpées formant des trous traversants (404) dans les ondes déformables.

5. Support pivot selon l'une quelconque des revendications précédentes, comprenant au moins deux éléments d'absorption d'énergie (214a-b).

6. Support pivot selon l'une quelconque des revendications précédentes, les axes (222, 223, 224) d'au moins deux structures de renforcement longitudinales étant non parallèles.

7. Support pivot selon l'une quelconque des revendications précédentes, le support pivot étant conçu pour être fixé à la carrosserie de véhicule par des soudures par points.

8. Support pivot selon l'une quelconque des revendications précédentes, les parties de fixation et l'élément d'absorption d'énergie étant adaptables pour fournir un centre de rotation (306) prédéfini pour le corps principal.

9. Support pivot selon l'une quelconque des revendications précédentes, le plan de fixation à la carrosserie de véhicule pour l'une des parties de fixation coupant le plan de fixation à la carrosserie de véhicule pour une autre partie de fixation.

10. Support pivot selon l'une quelconque des revendications précédentes, l'une des structures de renforcement longitudinales étant reliée à l'une des parties de fixation.

11. Support pivot selon l'une quelconque des revendications précédentes, le support pivot étant en un matériau métallique.

12. Support pivot selon l'une quelconque des revendications précédentes, l'élément d'absorption d'énergie étant d'un seul tenant avec le corps principal.

13. Support pivot selon l'une quelconque des revendications précédentes, le corps principal comprenant une première partie de corps principal (202a) et une seconde partie de corps principal (202b) qui sont attachées ensemble, la partie d'attache distale, une première partie d'attache intermédiaire (210a) et la partie d'attache avant étant reliées à la première partie de corps principal, et une seconde partie d'attache intermédiaire (210b) étant reliée à la seconde partie de corps principal.

14. Support pivot selon la revendication 13, la première partie de corps principal comprenant au moins une structure de renforcement longitudinale (216a) reliée à la première partie de fixation intermédiaire de la première partie de corps principal, et la seconde partie de corps principal comprenant au moins une structure de renforcement longitudinale (216d) reliée à la seconde partie de fixation intermédiaire.

15. Support pivot selon l'une quelconque des revendications précédentes, la structure de renforcement longitudinale étant un évidement longitudinal.
